# EUROPEAN PATENT SPECIFICATION

(11) **EP 1 572 795 B1**
(45) Date of publication and mention of the grant of the patent: **15.08.2007**
(21) Application number: 03786620.9
(22) Date of filing: 11.11.2003
(51) Int. Cl.: C08K 3/36, C08K 5/00, C08L 67/02, C08L 67/04

(54) **ALIPHATIC POLYESTER RESIN COMPOSITION**
ALIPHATISCHE POLYESTERHARZ-ZUSAMMENSETZUNG
COMPOSITION DE RESINE POLYESTER ALIPHATIQUE

(30) Priority: 13.12.2002 JP 2002362757
(43) Date of publication of application: 14.09.2005
(73) Proprietor: 3M Innovative Properties Company, St. Paul, MN 55133-3427 (US)
(72) Inventor: KOBAYASHI, Mitsuaki, Hino-shi, Tokyo 191-0042 (JP); TORIUMI, Naoyuki, Sagamihara, Kanagawa 228-0813 (JP)
(74) Representative: Vossius & Partner
(86) International application number: PCT/US2003/035746
(87) International publication number: WO 2004/055104

(56) References cited:
- EP-A- 0 980 894
- US-A- 4 101 422
- US-A- 6 136 905
- PATENT ABSTRACTS OF JAPAN vol. 1998, no. 08, 30 June 1998 (1998-06-30) & JP 10 081815 A (MITSUI PETROCHEM IND LTD), 31 March 1998 (1998-03-31) cited in the application

## Description

The present invention relates to an aliphatic polyester resin composition having excellent flexibility and high heat resistance.

Plastics are employed in various fields because of excellent chemical stability and high durability. However, plastics may cause problems upon disposal after use due to the stability. It is a social problem derived from landfill disposal and incineration of the wasted plastics. The plastics subjected to landfill disposal are not decomposed for a long period of time; thus, more landfills are necessary. Further, incineration of wasted plastics emits superheat to damage an incinerator. Furthermore, wasted plastics may generate a harmful substance.

To solve these problems, a biodegradable resin is known which is easily decomposed into water and carbon dioxide by microorganisms in earth or water. Particularly, an aliphatic polyester resin is an excellent biodegradable resin, which is more environmentally friendly because it has a characteristic capable of being easily decomposed in the presence of water and therefore decomposed after disposal without causing environmental pollution when used as a general-purpose resin, and also which is more biologically friendly because it exerts no or little influence on the living body after achieving the purpose and then decomposed and absorbed in the living body when retained as a medical material in the living body.

However, the aliphatic polyester resin caused problems when formed into a film, a filament or a molded article because of characteristics such as hardness, brittleness, and poor pliability at normal temperature. Also, the aliphatic polyester resin can not be used in hot water or a microwave oven and therefore used in limited purposes because an elastic modulus is rapidly lowered at a glass transition temperature or higher and the glass transition temperature is an upper temperature limit of the heat resistance.

To impart the flexibility to polylactic acid which is one of the aliphatic polyester resins, it has been proposed that polylactic acid is replaced by a copolymer with the other aliphatic polyester resin or a mixture of polylactic acid and the copolymer. For example, EP 0 515 203 A discloses adding an aliphatic dihydric alcohol such as polyethylene glycol or polypropylene glycol to impart the flexibility to polylactic acid.

Furthermore, JP Kokai No. 10-81815 discloses to impart the flexibility by adding silica, as an inorganic additive, and an aliphatic carboxylic acid amide to a mixture of an aliphatic polyester resin and a polyalkylene glycol.

US Pt. No. 4,101,422 discloses copolyesters which are derived from mixed dibasic acids and a branched-chain diol. These copolyesters are said to possess a unique balance of physical and chemical characteristics which permits their use in small amounts in blood separation tubes to provide an effective barrier between the light and heavy phases of the blood after centrifuging.

In US Pt. No. 6,136 a lactic acid polymer composition comprising formulating 100 parts by weight of a mixture consisting of 80-95% by weight of an L-lactic acid polymer having an L-lactic acid proportion of 75% or more and 5-20% by weight of a plasticizer selected from the group consisting of a polyhydric alcohol ester and a hydroxypolycarboxylic acid ester, 0.1-5 parts by weight of an anti-blocking agent having a SiO₂ content of 90% or more and an average particle size of 7-50 nm, and 0.1-2 parts by weight of a slip agent; a molded product and film obtained from the composition; and a preparation process of the same are disclosed.

EP 0 980 894 discloses a polylactic acid-based resin composition composed of a high molecular ingredient (A) comprising polylactic acid (a1) and an aliphatic polyester (B), and a film, particularly an inflation film, prepared from the resin composition.

Since polylactic acid is hard at room temperature and has an elastic modulus of more than 10⁹ Pa, and the elastic modulus decreases quickly to less than 10⁶ Pa at a temperature of 100 °C or more, the heat resistance is poor. To obtain a soft molded article, as described in the prior art, it is necessary to employ a means of adding several percentages to several tens of percentages of plasticizers, a means of reducing the glass transition temperature by preparing a copolymer containing components (other than lactic acid) whose amount is increased by several tens of percentages, a means of blending a soft (elastic modulus is 10⁹ Pa or less) resin in the service temperature range, or a combination thereof. However, the prior process can impart flexibility to polylactic acid, but not heat resistance.

To prevent the occurrence of flow, a crystal is formed by crystallization, thereby enabling the crystal to function as a crosslink point. However, because of low crystallization rate, polylactic acid has such a problem that it must be maintained at the temperature, at which crystallization can be performed, for a long time after melting at a temperature higher than a melting point and thus a molding operation requiring a long time is required. Therefore, the time close to the molding cycle of the general-purpose resin makes it impossible to obtain a molded article which has been crystallized to some extent. According to the prior art, it was difficult to obtain a molded article such as film, sheet, filament, or container, which has both the flexibility and the heat resistance, from a lactate polymer resin.

A desire of the present invention is to simultaneously impart the flexibility, heat resistance, and formability to an aliphatic polyester resin such as polylactic acid, to which the flexibility, the heat resistance and the formability are hardly imparted, simultaneously, according to the prior art.

In one embodiment, the present invention provides an aliphatic polyester resin composition comprising an aliphatic polyester resin, a plasticizer wherin the plasticizer is polyethylene glycol, an ester of poly(ethylene glycol), or a diglycerol ester, and hydrophilic silica particles, wherein the amount of the hydrophilic silica particles is within a range from 16 to 100 parts by weight based on 100 parts by weight of the total amount of the aliphatic polyester resin and the plasticizer.
Fig. 1 is a graph showing the results of measuring an elastic modulus of resin films produced in the Examples and Comparative Examples of the present invention.
Fig. 2 is a graph showing the results of measuring an elastic modulus of resin films produced in the Examples and Comparative Examples of the present invention.
Fig. 3 is a graph showing the results of measuring an elastic modulus of resin films produced in the Examples and Comparative Examples of the present invention.
Fig. 4 is a graph showing the results of measuring an elastic modulus of resin films produced in the Examples and Comparative Examples of the present invention.
Fig. 5 is a graph showing the results of measuring an elastic modulus of resin films produced in the Examples and Comparative Examples of the present invention.

According to the present invention, there can be provided a biodegradable resin having the flexibility and improved heat resistance by adding a plasticizer and a hydrophilic silica to an aliphatic polyester resin such as polylactic acid.

Flexibility is imparted to the aliphatic polyester resin by adding a plasticizer such as aliphatic polyhydric alcohol, while the addition of hydrophilic silica particles forms a hydrogen bond with the plasticizer, and thus making it possible to improve the heat resistance of the aliphatic polyester resin. Further, by using the aliphatic polyester resin of the present invention, various shaped articles can be formed.

The aliphatic polyester resin composition of the present invention contains an aliphatic polyester resin, a plasticizer, and hydrophilic silica particles. In the present invention, the aliphatic polyester resin includes an aliphatic polyhydroxycarboxylic acid, an aliphatic polyester resin, and a mixture thereof described below.

Specifically, it includes (1) aliphatic polyhydroxycarboxylic acid, for example, copolymer of a homopolymer such as polylactic acid or polyhydroxycaproic acid and lactic acid and the other aliphatic hydroxycarboxylic acid; (2) aliphatic polyester resin comprising a lactic acid unit, an aliphatic polyhydric carboxylic acid unit, and an aliphatic polyhydric alcohol unit; (3) aliphatic polyester resin containing a lactic acid unit and polyfunctional polysaccharides; (4) aliphatic polyester resin of an aliphatic polyhydric carboxylic acid such as polybutylene succinate and an aliphatic polyhydric alcohol; and (5) mixture of the above aliphatic polyhydroxycarboxylic acid and the above aliphatic polyester resin. In case the aliphatic polyhydroxycarboxylic acid and aliphatic polyester resin are copolymers, a random copolymer, an alternating copolymer, a block copolymer, and a graft copolymer are included. The concept of the mixture includes the concepts of a polymer blend and a polymer alloy.

In the present invention, as the polylactic acid, poly(L-lactic acid), wherein a constituent unit is composed only of L-lactic acid, poly(D-lactic acid), wherein a constituent unit is composed only of D-lactic acid, and poly(DL-lactic acid), wherein an L-lactic acid unit and a D-lactic acid unit exist in a different ratio can be used. Examples of the aliphatic hydroxycarboxylic acid other than lactic acid, which constitutes the aliphatic polyhydroxycarboxylic acid, include glycolic acid, 3-hydroxybutyric acid, 4-hydroxybutyric acid, 4-hydroxyvaleric acid, 5-hydroxyvaleric acid, and 6-hydroxycaproic acid. These aliphatic hydroxycarboxylic acids are used alone as a homopolymer, or used in combination with lactic acid as a copolymer.

The polylactic acid used in the present invention can be prepared by the method of directly subjecting L-lactic acid, D-lactic acid, or DL-lactic acid to dehydration polycondensation. Also it can be prepared by the method of subjecting lactide as a cyclic dimer of lactic acid to ring-opening polymerization. The ring-opening polymerization may be performed in the presence of a compound having a hydroxyl group, such as higher alcohol or hydroxycarboxylic acid. The copolymer of lactic acid and the other aliphatic hydroxycarboxylic acid can be prepared by the method of subjecting lactic acid and the hydroxycarboxylic acid to dehydration polycondensation. Also, it can be prepared by the method of subjecting lactide as a cyclic dimer of lactic acid and a cyclic compound of the aliphatic hydroxycarboxylic acid to ring-opening copolymerization. The polylactic acid may be prepared by any method.

Examples of the aliphatic polyhydric carboxylic acid, which is used in the preparation of the aliphatic polyester resin containing a lactic acid unit, an aliphatic polyhydric carboxylic acid unit and an aliphatic polyhydric alcohol unit or the aliphatic polyester resin of the aliphatic polyhydric carboxylic acid and the aliphatic polyhydric alcohol, include oxalic acid, succinic acid, malonic acid, glutaric acid, adipic acid, pimelic acid, suberic acid, azelaic acid, undecanoic diacid, dodecanoic diacid, and anhydrides thereof. These aliphatic polyhydric carboxylic acids may be acid anhydrides or mixtures with the acid anhydrides.

Examples of the aliphatic polyhydric alcohol include ethylene glycol, diethylene glycol, triethylene glycol, propylene glycol, dipropylene glycol, 1,3-butanediol, 1.4-butanediol, 3-methyl-1,5-pentanediol, 1,6-hexanediol, 1,9-nonanediol, neopentyl glycol, tetramethylene glycol and 1,4-cyclohexane dimethanol.

The aliphatic polyester resin comprising a lactic acid unit, an aliphatic polyhydric carboxylic acid unit, and an aliphatic polyhydric alcohol unit can be prepared by the method of reacting the aliphatic polyhydric carboxylic acid and the aliphatic polyhydric alcohol with a copolymer of polylactic acid or lactic acid of the other hydroxycarboxylic acid, or the method of reacting the aliphatic polyhydric carboxylic acid and the aliphatic polyhydric alcohol with lactic acid. Also, it can be prepared by the method of reacting the aliphatic polyhydric carboxylic acid and the aliphatic polyhydric alcohol with lactide as the cyclic dimer of lactic acid or a cyclic ester of the hydroxycarboxylic acid. The aliphatic polyester resin can be prepared by any method. Also, the aliphatic polyester resin of the aliphatic polyhydric carboxylic acid and the aliphatic polyhydric alcohol can be prepared by the method of reacting the aliphatic polyhydric carboxylic acid with the aliphatic polyhydric alcohol.

Examples of the polyfunctional polysaccharides used in the preparation of the aliphatic polyester resin containing a lactic acid unit and polyfunctional polysaccharides include cellulose, cellulose nitrate, cellulose acetate, methylcellulose, ethylcellulose, carboxymethylcellulose, nitrocellulose, cellophane, viscose rayon, regenerated cellulose such as cupra, hemicellulose, starch, amylopectin, dextrin, dextran, glycogen, pectin, chitin, chitosan, and mixtures and derivatives thereof.

The aliphatic polyester resin containing a lactic acid unit and polyfunctional polysaccharides can be prepared by the method of reacting the polyfunctional polysaccharides and lactic acid or polylactic acid with a copolymer of lactic acid and hydroxycarboxylic acid. Also it can be prepared by the method of reacting the polyfunctional polysaccharides with lactide as the cyclic dimer of lactic acid or cyclic esters of the hydroxycarboxylic acid. The aliphatic polyester resin may be prepared by any method.

In the composition of the present invention, various aliphatic polyester resins described above can be used. Particularly, those containing a lactic acid component, for example, a copolymer of a homopolymer such as polylactic acid, polybutylene succinate or polyhydroxycaproic acid, lactic acid and an aliphatic hydroxycarboxylic acid other than lactic acid (in case the transparency is required, those containing lactic acid in a weight ratio of 50% or more are preferred) and an aliphatic polyester resin of lactic acid, an aliphatic polyhydric carboxylic acid and an aliphatic polyhydric alcohol (in case the transparency is required, those containing lactic acid in a weight ratio of 50% or more are preferred) are preferably used. Particularly, it is suited for use in an aliphatic polyester resin having a low crystallization rate such as polylactic acid.

The molecular weight of the aliphatic polyester resin used in the present invention is not specifically limited as far as the resulting molded article such as container, film, sheet, or plate exhibits substantially sufficient mechanical and physical properties. When the molecular weight is low, the strength of the resulting molded article is lowered and the decomposition rate increases. On the other hand, when the molecular weight is high, the moldability is lowered and it becomes difficult to perform the molding operation. Accordingly, the weight-average molecular weight of the aliphatic polyester resin used in the present invention is within a range from 10,000 to 5,000,000, preferably from 30,000 to 3,000,000, more preferably from 50,000 to 2,000,000, still more preferably from 70,000 to 1,000,000, and most preferably from 90,000 to 500,000.

The concept of the term "plasticizer" as used herein refers to any compound having the effect capable of lowering the elastic modulus of the resin by adding to the resin, and the compound may be in the form of gas, liquid, or solid and may be an organic or inorganic compound. The plasticizer used in the aliphatic polyester resin composition includes triethylene glycol di-(2-ethylbutylate), triethylene glycol di-(2-ethylhexoate), polyethylene glycol di(2-ethylhexoate), dibutylmethylenebis-thioglycolate, polyethylene glycol, and polyglycol ether, and examples of the glycerin derivative, which can be used, include glycerol monoacetate, glycerol diacetate, glycerol triacetate, glycerol tributylate, glycerol tripropionate, and glycerol ether acetate.

The amount of the plasticizer can vary according to the kind of the aliphatic polyester resin and the kind of the plasticizer. The amount may be controlled so that the aliphatic polyester resin composition plasticized by the plasticizer is softened at the temperature lower than a melting point of the aliphatic polyester resin and can be molded, and is usually within a range from 2.0 to 50 parts by weight based on 100 parts by weight of the aliphatic polyester resin.

The hydrophilic silica particles to be added in the aliphatic polyester resin composition of the present invention can form a hydrogen bond with the plasticizer and means both hydrophilic silica particles and particles coated with the hydrophilic silica. The hydrophilic silica is silica having a SiOH (silanol group) formed by bonding silicon with a hydroxyl group. The hydrophilic silica is desirably amorphous and may be prepared by either a thermal decomposition method or a precipitation method. The silica prepared by the thermal decomposition method can be obtained by continuously decomposing silicon tetrachloride (SiCl₄) with intense heating at 1000 °C in the presence of hydrogen and oxygen. The silica prepared by the precipitation method is obtained by reacting a solution of an alkali metal silicate, for example, sodium silicate with an acid. Specifically, "FINE SEAL B" (trade name, manufactured by Tokuyama Soda Co., Ltd.) and "AEROSIL 200" (trade name, manufactured by Japan Aerosil Ltd.) can be used.

The particles coated with the hydrophilic silica also include particles coated entirely or partially with silica, particularly mineral particles coated entirely or partially with silica, and examples thereof include titanium oxide-containing silica beads which are commercially available from Toray Industries, Inc. under the trade name of Torayceram S-IT™ titanium oxide-containing silica alumina microsphere which is commercially available from Zeelan Co. under the trade name ofZ-Light-Sphere W1O12™; silica/titanium oxide particles (particle diameter: 106 to 500 µm) synthesized by an amorphous precipitation method, which are commercially available from Crossfield Co. under the trade name of Neosil PC20S™; particles obtained by coating silica particles with titanium dioxide and coating the coated silica particles with porous silica (weight ratio of silica/titanium dioxide/porous silica=85/5/10), which are commercially available from SACI-CFPA Co. under the trade name of ACS-0050510™; particles obtained by treating anatase type titanium oxide particles with alumina and silica in water (40%), which are commercially available from Rhodia Chimie CRA Co. under the trade name of Mirasun TIW 60™; 32% aqueous dispersion of particles obtained by coating anatase type titanium oxide particles with silica/alumina/cerium IV (weight ratio=15/5/3), which are commercially available from Rodia Chimie CRA Co. under the trade name of Mirasun TIW 160™; 40% aqueous dispersion of particles obtained by treating anatase type titanium oxide particles with alumina and silica (weight ratio of titanium/alumina silica=34/4.3/1.7), which are commercially available from Uniqema Co. under the trade name of Tioveil AQ-N™; titanium oxide nanoparticles coated with silica (weight ratio of titanium/silica=66/33), which are commercially available from Nichimem Europe PLC under the trade name of Max light TS-04™; and titanium oxide particles coated with silica (weight ratio of titanium/silica=80/20), which are commercially available from Nichimen Europe PLC under the trade name of Maxlight TS-042™.

The average particle diameter of the hydrophilic silica particle is not specifically limited, but is within a range from 5 nm to 30 nm. Especially, in case optically transparency is required, it is within a range from 5 nm to 100 nm. When the average particle diameter of the hydrophilic silica particle is larger than 100 nm, light is scattered and transparency decreases.

The amount of the hydrophilic silica particle is controlled within a range from 15 to 100 parts by weight, preferably 15 to 40 parts by weight based on 100 parts by weight of the total amount of the aliphatic polyester resin and the plasticizer. On the other hand, when the amount is more than 100 parts by weight, resin strength decreases and formability decreases.

To the aliphatic polyester resin composition of the present invention, antioxidants, ultraviolet absorbers, antistatic agents, lubricants, coloring pigments, and a small amount of other resins can be added for the purposes of improving physical properties such as elastic modulus, tensile strength, flexural strength, mechanical strength, heat resistance, and weatherability. In the composition of the present invention, as far as the characteristics of present invention are not impaired, various elastomers (for example, SBR (styrene-butadiene rubber), NBR (acrylonitrile-butadiene rubber), SBS (polystyrene-polybutadiene-polystyrene) type thermoplastic elastomers), additives (for example, nucleating agents, pigments, stabilizers, releasants, flame retardants; antioxidants, ultraviolet absorbers, antibacterial agent, and dyes), fillers (for example, calcium carbonate, clay, carbon black, impact-resistant core/shell type particles), pigments (for example, titanium oxide, metallic pigments and pearlescent pigments) can be appropriately used according to the purposes and applications. The aliphatic polyester resin, the plasticizer, the hydrophilic silica, and other additives can be mixed in the form of a solid using publicly known kneading means such as Henschel mixer and ribbon blender.

Using the aliphatic polyester resin composition of the present invention, molded articles can be produced by an injection molding method, an extrusion blow molding method, an extrusion stretching blow molding method, an injection blow molding method, an injection stretching blow molding method, a thermoforming method, or a compression molding method. Also film-, sheet- and plate-shaped molded articles can be produced by an inflation molding method or a T-die molding method.

The aliphatic polyester resin composition of the present invention has the flexibility at normal temperature and it is not necessary to stretch to increase the crystallinity when used as a thin film or fibers. Since a stretching operation is not required, it is possible to impart sufficient durability to a thick sheet such as doormat. Furthermore, a molded article having proper elastic modulus even at high temperature of 100 °C or higher can be produced. Therefore, it became possible to apply an aliphatic polyester resin, particularly polylactic acid, which had hitherto been used only in stationery and packaging materials, to various uses such as film-shaped molded articles having different thickness and shape in outdoor, automotive, and electrical fields. Specifically, mechanical fasteners, floor mats composed of thick fibers, agricultural films, various containers for beverages and cosmetics, and packaging films for foods can be formed by the above method.

### EXAMPLES

### Example 1

To 100 parts by weight of polylactic acid (LACTY9800, manufactured by Shimadzu Corp.) having a weight-average molecular weight of 120,000, 30 parts by weight of polyethylene glycol having a weight-average molecular weight of 200 was added and the mixture was kneaded at 150 °C and 30 rpm using a Brabender mixer. To 100 parts by weight of the mixed resin, 20 parts by weight of a hydrophilic amorphous silica particles ("AEROSIL 200" having an average primary particle diameter of 12 nm, manufactured by Japan Aerosil Ltd.) was added and the mixture was further kneaded. The composition thus obtained was formed into a film at 150 °C, the elastic modulus were measured, and temperature dependency of the elastic modulus were determined. The elastic modulus was measured by using Rheometric RSAII, manufactured by Rheometric Science Inc., under tensile mode, frequency of 1 Hz, temperature of -50 °C to 130 °C.

### Example 2

A composition was prepared and the elastic modulus were measured according to Example 1, except that the amount of the hydrophilic amorphous silica particles is changed to 40 parts by weight.

### Comparative Example 1

Polylactic acid alone used in Example 1 was formed into a film at 150 °C and the elastic modulus were measured.

### Comparative Example 2

A composition was prepared, it was formed into a film, and the elastic modulus were measured according to Example 1, except that polyethylene glycol was not added.

### Comparative Example 3

A composition was prepared, it was formed into a film, and the elastic modulus were measured according to Example 1, except that the hydrophilic amorphous silica particles were not added.

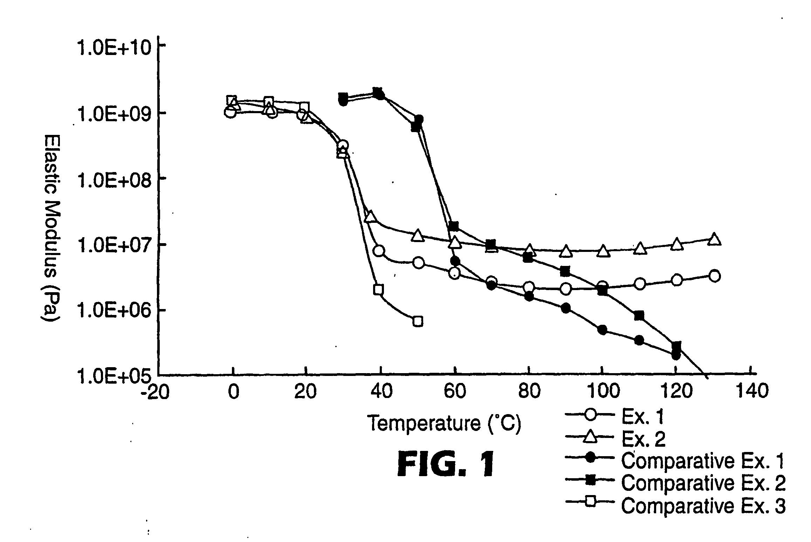

The above results are shown in Fig. 1. As shown in Fig. 1, when using polylactic acid alone (Comparative Example 1), the resulting product is hard having an elastic modulus of 10⁹ Pa at 50 °C or lower. When polyethylene glycol is added to polylactic acid (Comparative Example 3), the elastic modulus is 1.0 x 10⁹ Pa or less at room temperature (25 °C) and the flexibility is imparted, while the temperature dependence of the elastic modulus is high and the elastic modulus at 40 °C is lower than that of polylactic acid. Therefore, the heat resistance is poor. To the contrary, as described in Example 1, the addition of 20 parts by weight of hydrophilic amorphous silica particles to 100 parts by weight of the total amount of the polylactic acid and the plasticizer makes it possible to prevent lowering of the elastic modulus at high temperature, and thus the same elastic modulus as the original elastic modulus of polylactic acid can be maintained even at 80 °C or higher.

### Example 3

A composition was prepared, it was formed into a film, and the elastic modulus were measured according to Example 1, except that polyethylene glycol having a weight-average molecular weight of 200 was changed to polyethylene glycol having a number-average molecular weight of 1000.

### Example 4

A composition was prepared, it was formed into a film, and the elastic modulus were measured according to Example 1, except that the amount of the polyethylene glycol was changed to 15 parts by weight.

### Comparative Example 4

A composition was prepared, it was formed into a film, and the elastic modulus were measured according to Example 3, except that the hydrophilic amorphous silica particles were not added.

### Comparative Example 5

A composition was prepared, it was formed into a film, and the elastic modulus were measured according to Example 3, except that the amount of the hydrophilic amorphous silica particles was changed to 10 parts by weight.

### Comparative Example 6

A composition was prepared, it was formed into a film, and the elastic modulus were measured according to Example 4, except that the amount of the hydrophilic amorphous silica particles was changed to 10 parts by weight.

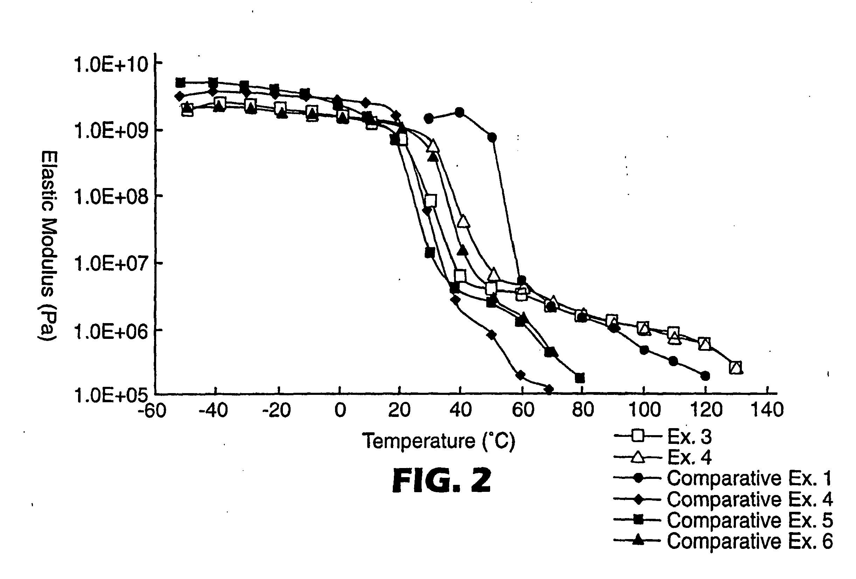

The above results are shown in Fig. 2. As shown in Fig. 2, when the amount of the hydrophilic amorphous silica particles is 10 parts by weight or less based on 100 parts by weight of the total amount of the polylactic acid and the plasticizer, lowering of the elastic modulus at high temperature could not be prevented.

### Example 5

To 100 parts by weight of polylactic acid (LACTY9800, manufactured by Shimadzu Corp.) having a weight-average molecular weight of 120,000, 30 parts by weight of polyethylene glycol having a weight-average molecular weight of 2,000 was added and the mixture was kneaded at 150 °C and 30 rpm using a Brabender mixer. To 100 parts by weight of the mixed resin, 40 parts by weight of a hydrophilic amorphous silica particles ("AEROSIL 200" having an average primary particle diameter of 12 nm, manufactured by Japan Aerosil Ltd.) was added and the mixture was further kneaded. The composition thus obtained was formed into a film at 150 °C and temperature characteristics of the elastic modulus were determined.

### Comparative Example 7

A composition was prepared, it was formed into a film, and the elastic modulus were measured according to Example 5, except that the hydrophilic amorphous silica particles were not added.

### Comparative Example 8

A composition was prepared, it was formed into a film, and the elastic modulus were measured according to Example 5, except that hydrophobic amorphous silica particles ("AEROSIL RX200" having an average primary particle diameter of 12 nm, manufactured by Japan Aerosil Ltd.) were added instead of the hydrophilic amorphous silica particles.

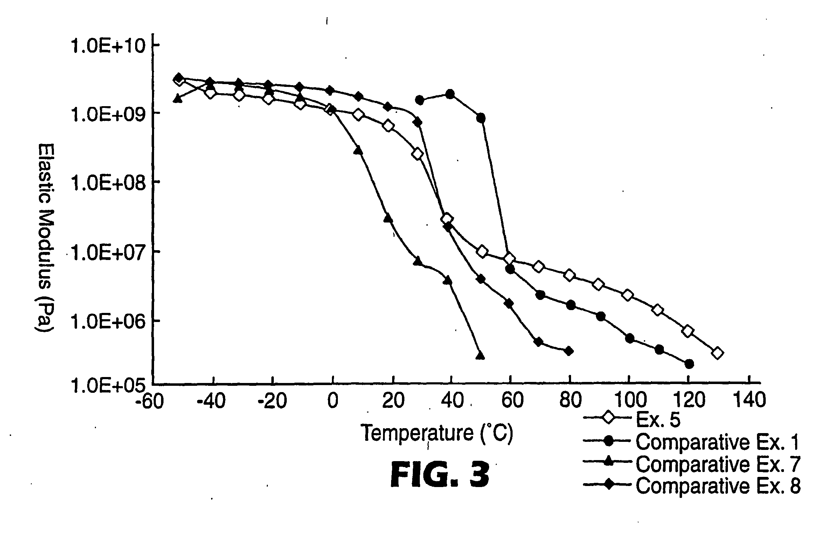

The above results are shown in Fig. 3. As shown in Fig. 3, when the hydrophilic amorphous silica particles are added (Example 5), the elastic modulus at high temperature was improved. When the hydrophobic amorphous silica particles are added (Comparative Example 8), the elastic modulus at low temperature increased and also lowering of the elastic modulus at high temperature was not prevented.

### Example 6

A composition was prepared, it was formed into a film, and the elastic modulus were measured according to Example 1, except the polyethylene glycol having a weight-average molecular weight of 200 was changed to a polyethylene glycol having a number-average molecular weight of 1000.

### Example 7

A composition was prepared, it was formed into a film, and the elastic modulus were measured according to Example 1, except the polyethylene glycol having a weight-average molecular weight of 200 was changed to diglycerol ester having an acetylation ratio of 50% or more (manufactured by Riken Vitamin Co., Ltd., "LIKEMAL PL-710").

### Comparative Example 9

A composition was prepared, it was formed into a film, and the elastic modulus were measured according to Example 6, except that the hydrophilic amorphous silica particles were not added.

### Comparative Example 10

A composition was prepared, it was formed into a film, and the elastic modulus were measured according to Example 7, except that the hydrophilic amorphous silica particles were not added.

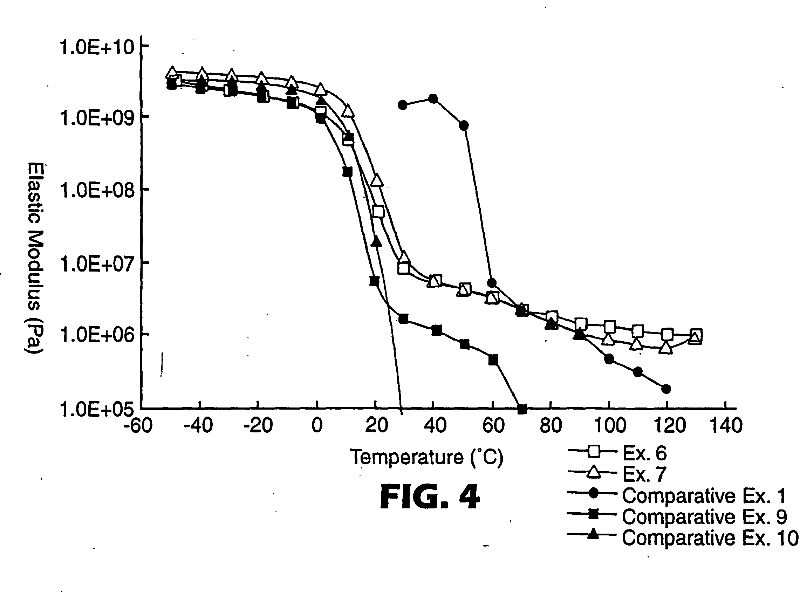

The above results are shown in Fig. 4. It was shown that the flexibility and the heat resistance can be imparted even in poly(ethylene glycol)dimethyl ether wherein both terminals of polyethylene glycol are substituted with methyl ether and a hydrophilic silica are added (Example 6). Also it was shown that the flexibility and the heat resistance can be imparted similarly even in case PL-710 wherein hydroxyl groups of a diglycol derivative are treated with acetyl and a hydrophilic amorphous silica are added (Example 7).

### Example 8

A composition was prepared, it was formed into a film, and the elastic modulus were measured according to Example 3, except the polylactic acid having a weight-average molecular weight of 120,000 was changed to polyethylene succinate having a weight-average molecular weight of 240,000 (manufactured by Nihon Syokubai Co., Ltd., Runare SE-P1000).

### Comparative Example 11

The polyethylene succinate having a weight-average molecular weight of 240,000 alone used in Example 8 was formed into film and the elastic modulus were measured according to Example 1.

### Comparative Example 12

A composition was prepared, it was formed into a film, and the elastic modulus were measured according to Example 8, except that the hydrophilic amorphous silica particles were not added.

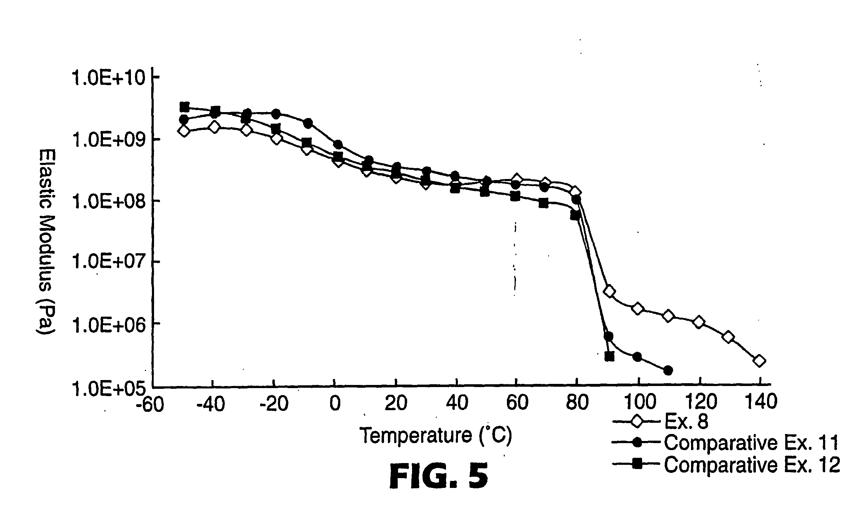

The above results are shown in Fig. 5. When polyethylene succinate is used instead of polylactic acid, similar results are resulted.

The above results are summarized in Table 1 below.

**Table 1**

| | Composition of resin | | Amount of silica | | | |
|---|---|---|---|---|---|---|
| | Aliphatic polyester resin | Plasticizer | 200 | RX200 | Flexibility | Heat resistance |
| Example 1 | PLA: 100 | PEG200: 30 | 20 | | O | O |
| Example 2 | PLA: 100 | PEG200: 30 | 40 | | O | O |
| Comparative Example 1 | PLA: 100 | | | | X | Δ |
| Comparative Example 2 | PLA: 100 | | 20 | | X | O |
| Comparative Example 3 | PLA: 100 | PEG200: 30 | | | Δ | X |
| Example 3 | PLA: 100 | PEG 1000: 30 | 20 | | O | O |
| Example 4 | PLA: 100 | PEG 1000: 15 | 20 | | Δ | O |
| Comparative Example 4 | PLA: 100 | PEG1000: 30 | | | Δ | X |
| Comparative Example 5 | PLA: 100 | PEG1000: 30 | 10 | | O | X |
| Comparative Example 6 | PLA: 100 | PEG1000: 15 | 10 | | O | X |
| Example 5 | PLA: 100 | PEG2000: 30 | 40 | | O | O |
| Comparative Example 7 | PLA: 100 | PEG2000: 30 | | | O | X |
| Comparative Example 8 | PLA: 100 | PEG2000:30 | | 40 | Δ | X |
| Example 6 | PLA: 100 | PEGDME:30 | 20 | | O | O |
| Example 7 | PLA: 100 | PL710: 30 | 20 | | O | Δ |
| Comparative Example 9 | PLA: 100 | PEGDME: 30 | | | O | X |
| Comparative Example 10 | PLA: 100 | PL710: 30 | | | O | X |
| Example 8 | PES: 100 | PEG1000: 30 | 20 | | O | O |
| Comparative Example 11 | PES: 100 | | | | O | X |
| Comparative Example 12 | PES: 100 | PEG1000: 30 | | | O | X |

Table 1 shows the test results. Each numeral put after PEG denotes the molecular weight. The amount is described after the numeral. The amount of silica is weight fraction based on 100 of the weight of the resin.
EGDME: poly(ethylene glycol) dimethyl ether, Mn=1000
PL710: Rikemal PL-710, manufactured by Riken Vitamin Co., Ltd.

In the above Table, the flexibility was evaluated by the elastic modulus, and the symbol O means that the elastic modulus is 1 x 10⁹ or less at 20 °C; Δ means that the elastic modulus is 1 x 10⁹ or less at 20 to 30 °C; and X means that the elastic modulus is 1 x 10⁹ or more at 40 °C. In addition, the heat resistance is also evaluated by the elastic modulus, and the symbol O means that the elastic modulus is 1 x 10⁶ or more at 100 °C; Δ means that the elastic modulus is 1 x 10⁶ or less at 90 to 100 °C; and X means that the elastic modulus is 1 x 10⁶ or less at 90 °C.

## Claims

1. An aliphatic polyester resin composition comprising an aliphatic polyester resin, a plasticizer wherein the plasticizer is polyethylene glycol, an ester of poly(ethylene glycol), or a diglycerol ester and hydrophilic silica particles, wherein the amount of the hydrophilic silica particles is within a range from 15 to 100 parts by weight based on 100 parts by weight of the total amount of the aliphatic polyester resin and the plasticizer.

2. The aliphatic polyester resin composition according to claim 1, wherein the aliphatic polyester resin is polylactic acid, polyhydroxybutyric acid, or a copolymer thereof.

3. The aliphatic polyester resin composition according to claim 1, wherein the aliphatic polyester resin is polylactic acid.

4. The aliphatic polyester resin composition according to claim 1, which contains the plasticizer in the amount within a range from 2.0 to 50 parts by weight based on 100 parts by weight of the aliphatic polyester resin.

5. The aliphatic polyester resin composition according to claim 1, wherein the hydrophilic silica particle is a hydrophilic amorphous silica particle having an average primary particle diameter of 100 nm or less.

## Patentansprüche

1. Aliphatische Polyesterharzzusammensetzung, umfassend ein aliphatisches Polyesterharz, einen Weichmacher, wobei der Weichmacher Polyethylenglykol, ein Ester von Poly(ethylenglykol) oder ein Diglycerinester ist, und hydrophile Siliziumdioxidpartikel, wobei die Menge der hydrophilen Siliziumdioxidpartikel in einem Bereich von 15 bis 100 Gewichtsteilen liegt, bezogen auf 100 Gewichtsteile der Gesamtmenge des aliphatischen Polyesterharzes und des Weichmachers.

2. Aliphatische Polyesterharzzusammensetzung nach Anspruch 1, wobei das aliphatische Polyesterharz Polymilchsäure, Polyhydroxybuttersäure oder ein Copolymer davon ist.

3. Aliphatische Polyesterharzzusammensetzung nach Anspruch 1, wobei das aliphatische Polyesterharz Polymilchsäure ist.

4. Aliphatische Polyesterharzzusammensetzung nach Anspruch 1, die den Weichmacher in der Menge in einem Bereich von 2,0 bis 50 Gewichtsteilen enthält, bezogen auf 100 Gewichtsteile des aliphatischen Polyesterharzes.

5. Aliphatische Polyesterharzzusammensetzung nach Anspruch 1, wobei das hydrophile Siliziumdioxidpartikel ein hydrophiles amorphes Siliziumdioxidpartikel mit einem durchschnittlichen Primärpartikeldurchmesser von 100 nm oder weniger ist.

## Revendications

1. Composition de résine polyester aliphatique comprenant une résine polyester aliphatique, un plastifiant, dans laquelle le plastifiant est un polyéthylèneglycol, un ester de polyéthylèneglycol ou un ester de diglycérol, et des particules de silice hydrophile, dans laquelle la quantité de particules de silice hydrophile est comprise dans une gamme de 15 à 100 parties en poids pour 100 parties en poids de la quantité totale de résine polyester aliphatique et de plastifiant.

2. Composition de résine polyester aliphatique selon la revendication 1, dans laquelle la résine polyester aliphatique est un poly(acide lactique), un poly-(acide hydroxybutyrique), ou un copolymère de ceux-ci.

3. Composition de résine polyester aliphatique selon la revendication 1, dans laquelle la résine polyester aliphatique est un poly(acide lactique).

4. Composition de résine polyester aliphatique selon la revendication 1, qui contient le plastifiant en quantité comprise dans une gamme de 2,0 à 50 parties en poids pour 100 parties en poids de résine polyester aliphatique.

5. Composition de résine polyester aliphatique selon la revendication 1, dans laquelle la particule de silice hydrophile est une particule de silice amorphe hydrophile ayant un diamètre de particule primaire moyen d'au plus 100 nm.
